Europäisches Patentamt

European Patent Office

Office européen des brevets

(19)

(11) Numéro de publication : **0 086 525**
**B1**

(12) FASCICULE DE BREVET EUROPÉEN

(45) Date de publication du fascicule du brevet :
20.08.86

(21) Numéro de dépôt : 83200175.4

(22) Date de dépôt : 02.02.83

(51) Int. Cl.⁴ : **H 04 N 7/06, H 04 J 9/00**

(54) Procédé d'émission et émetteur de télévision à plusieurs voies de son, et téléviseur à plusieurs voies de son.

(30) Priorité : 11.02.82 FR 8202264

(43) Date de publication de la demande :
24.08.83 Bulletin 83/34

(45) Mention de la délivrance du brevet :
20.08.86 Bulletin 86/34

(84) Etats contractants désignés :
BE CH DE FR IT LI LU

(56) Documents cités :
FR-A- 1 107 198
US-A- 2 578 714
US-A- 2 878 319
IEEE TRANSACTIONS ON CONSUMER ELECTRO-
NICS, vol. CE-27, no. 3, août 1981, pages 366-370,
New York, USA Y. NUMAGUCHI et al.: "Multichannel
sound system for television broadcasting"
IEEE TRANSACTIONS ON CONSUMER ELECTRO-
NICS, vol. CE-27, no. 3, août 1981, pages 398-409,
New York, USA C.G. EILERS et al.: "Television multichannel sound broadcasting - a proposal"

(73) Titulaire : **LA RADIOTECHNIQUE, Société Anonyme
dite:**
**51, rue Carnot BP 301**
**F-92156 Suresnes Cedex (FR)**
**FR**
**N.V. Philips' Gloeilampenfabrieken**
**Groenewoudseweg 1**
**NL-5621 BA Eindhoven (NL)**
**BE CH DE IT LI LU**

(72) Inventeur : Geoffray, Christian
Société Civile S.P.I.D. 209 rue de l'Université
F-75007 Paris (FR)
Inventeur : Lecat, Jean
Société Civile S.P.I.D. 209 rue de l'Université
F-75007 Paris (FR)

(74) Mandataire : Pinchon, Pierre et al
Société Civile S.P.I.D. 209 rue de l'Université
F-75007 Paris (FR)

## Description

L'invention concerne un procédé d'émission de télévision associant la transmission d'images à celle de plusieurs voies de son dans lequel on utilise, pour transmettre une première voie de son, une modulation de l'amplitude d'une porteuse, cette même porteuse étant en plus modulée par déplacement de fréquence ou de phase.

Elle concerne aussi un émetteur de télévision muni d'un modulateur d'amplitude pour une première voie de son utilisant une première porteuse, et de moyens pour moduler en fréquence l'onde qui est utilisée comme première porteuse par le susdit modulateur d'amplitude.

Elle concerne également un téléviseur comportant des premiers moyens pour démoduler une onde incidente modulée en amplitude par une voie de son.

Depuis un certain temps, on souhaite pouvoir associer aux images de télévision un accompagnement sonore en stéréophonie. Dans certains cas, on souhaite même pouvoir transmettre plusieurs voies de son différentes par exemple pour utiliser des langues différentes, que ce soit dans des régions ou pays multilingues, ou bien lors de la transmission d'un film étranger, pour donner le choix entre la version originale ou la version doublée. On peut même, dans certains cas, désirer transmettre plus de deux voies de son, pour certains commentaires, par exemple dans le cas d'émissions payantes ou réservées à un certain auditoire.

De nombreux procédés ont été proposés, mais aucun d'entre eux n'est vraiment satisfaisant. On se trouve, en effet, confronté à différents impératifs contradictoires. Il convient que les voies de son soient toutes d'une qualité suffisante, qu'elles n'interfèrent pas entre elles, qu'elles soient relativement insensibles à des perturbations de la transmission, que leur présence ne perturbe pas l'image, et il est également très désirable que le nouveau procédé de transmission soit compatible, c'est-à-dire que les récepteurs non prévus pour le recevoir continuent à fournir les mêmes prestations qu'avec l'ancien procédé.

Un procédé correspondant au préambule ci-dessus est enseigné par les brevets FR-A-894 994 et FR-A-1 107 198 qui décrivent un système de double transmission permettant la transmission conjointe de deux signaux électriques véhiculant deux programmes sonores distincts, sur une même voie, par exemple sur une même onde porteuse. Selon ces documents, il est proposé de moduler simultanément la porteuse affectée à la voie son d'un programme de télévision, à la fois en fréquence (ou en phase) et en amplitude. Le récepteur permettant la réception des deux programmes est muni d'une voie à détection d'amplitude (comprenant un détecteur d'enveloppe ordinaire) et une voie à démodulation de fréquence (comportant un discriminateur), l'une ou l'autre voie étant choisie à volonté pour recevoir l'un ou l'autre programme. Une association de plusieurs dispositifs selon les documents ci-dessus est en outre décrite par le brevet US-A-2 878 319, association qui permet ainsi de transmettre quatre voies au lieu de deux.

Le procédé selon les documents ci-dessus présente l'inconvénient de ne pas procurer une séparation suffisante de voies à cause de la modulation parasite d'une des modulations par l'autre. Un moyen d'y remédier est décrit dans le document FR-A-1 107 198. Ce moyen consiste en l'utilisation d'un récepteur associé à l'émetteur, récepteur à partir duquel on détermine les éléments de la diaphonie, qu'on utilise pour introduire une correction avant modulation. Ce procédé présente plusieurs inconvénients : d'une part le récepteur de l'usager doit être d'un type normalisé correspondant à celui utilisé pour corriger l'émetteur, ce qui impose des contraintes aux constructeurs de récepteurs, et d'autre part les récepteurs déjà en service ne comportent pas de dispositif évitant la réception parasite d'un signal modulé en fréquence.

Le procédé selon l'invention remédie à tous les inconvénients des procédés mentionnés ci-dessus : il offre la possibilité de transmettre plusieurs voies de son de haute qualité en plus de la voie analogique selon l'ancien standard ; le procédé est parfaitement compatible, c'est-à-dire que les téléviseurs du parc existant continuent, sans modification, à recevoir normalement une voie de son monaural, et la modulation des voies supplémentaires présente toutes les qualités requises de non-interférence, de bonne insensibilité aux perturbations de transmission, et de non-perturbation de l'image.

L'invention repose sur l'idée d'ajouter à la discrimination entre les signaux, obtenue grâce aux deux types de modulation différents, une deuxième discrimination obtenue grâce à l'utilisation d'une sous-porteuse pour un seul des signaux, sous-porteuse qui module en fréquence la porteuse haute-fréquence, cependant qu'au contraire l'autre signal module directement la porteuse haute fréquence.

Grâce à cet artifice, on obtient une diaphonie suffisamment faible pour permettre la transmission de deux sons différents.

Ainsi, un procédé d'émission de télévision selon l'invention est notamment remarquable en ce que la porteuse modulée en amplitude est en plus modulée par déplacement de fréquence ou de phase, de façon à transmettre au moins une deuxième voie de son, et en ce que le signal modulant utilisé pour cette modulation par déplacement de fréquence ou de phase est une sous-porteuse elle-même modulée directement par le signal à fréquence audible d'une deuxième voie de son.

Ceci a pour avantage essentiel la compatibilité vis-à-vis du parc existant de téléviseurs recevant une voie de son en modulation d'amplitude, tout en n'occupant pas, dans le spectre des fréquences, une place excessive, et en offrant une excellente qualité de réception à deux sons. Ladite-sous-porteuse peut être modulée en amplitude, ce qui offre l'avantage de la plus grande simplicité, ou modulée en fréquence, ce qui offre la meilleure diaphonie.

Pour obtenir des performances optimales, il est avantageux qu'on provoque une limitation du taux de modulation d'amplitude, telle que l'amplitude de la porteuse reste en toutes circonstances supérieure à un seuil déterminé.

Ceci permet d'obtenir en permanence une information concernant l'autre modulation.

Un téléviseur selon l'invention est notamment remarquable en ce qu'un conducteur amenant une onde incidente, modulée en amplitude par une voie de son, à des premiers moyens pour la démoduler, amène en outre cette même onde à l'entrée de seconds moyens pour extraire de cette onde qui est, en plus, modulée en fréquence par une sous-porteuse, une deuxième voie de son véhiculée par ladite sous-porteuse. Ce téléviseur présente l'avantage de pouvoir recevoir une deuxième voie de son par la simple adjonction desdits seconds moyens, et sans rien modifier au reste du téléviseur. Un téléviseur d'un modèle ancien peut ainsi recevoir une deuxième voie de son, sans rien y remplacer, mais seulement en y prélevant la fréquence intermédiaire son, dite ci-dessus « onde incidente », pour l'amener à un circuit rajouté, éventuellement à l'extérieur du téléviseur.

Avantageusement, un téléviseur selon l'invention comporte un premier démodulateur de fréquence, et un deuxième démodulateur de fréquence auquel est fourni le signal produit par le premier démodulateur de fréquence, ces deux démodulateurs constituant les susdits seconds moyens dans le cas où l'onde reçue comporte une sous-porteuse modulée en fréquence.

Avantageusement, un téléviseur selon l'invention, dans une autre version, comporte un démodulateur de fréquence et un démodulateur d'amplitude auquel est fourni le signal produit par le démodulateur de fréquence, ceci dans le cas où l'onde reçue comporte une sous-porteuse modulée en amplitude.

La description qui va suivre, en regard des dessins annexés, décrivant des exemples non limitatifs, fera bien comprendre comment l'invention peut être réalisée.

La figure 1 représente le spectre de fréquence d'une émission de télévision selon l'invention.

La figure 2 représente à plus grande échelle, une partie du spectre de la figure 1.

La figure 3 représente schématiquement un émetteur de télévision pour émettre selon le procédé de l'invention.

La figure 4 représente schématiquement un circuit de limitation de la modulation d'amplitude.

La figure 5 représente schématiquement un récepteur de télévision selon l'invention.

Le procédé d'émission de télévision selon l'invention associe la transmission d'images à celle de plusieurs voies de son. Pour cela on utilise, pour transmettre plusieurs voies de son, une sous-porteuse qui module par déplacement de fréquence une porteuse, et on superpose à cette modulation par déplacement de fréquence, une modulation d'amplitude qui module la même porteuse.

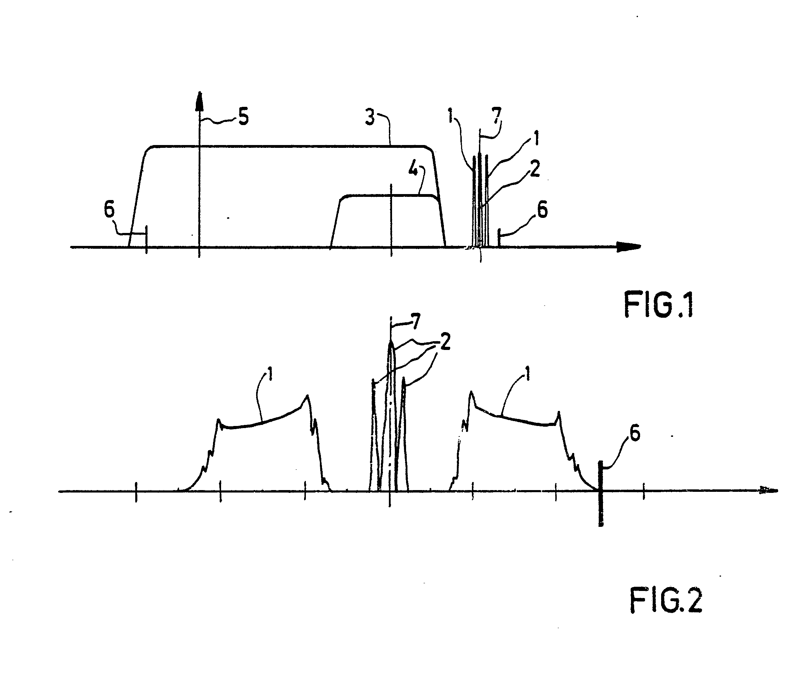

La figure 1 montre le spectre de l'émission obtenue : la porteuse vision est représentée en 5, la porteuse son unique est représentée en 7, l'écart entre elles est de 6,5 MHz.

Le spectre vidéo est indiqué en 3, le spectre de la modulation par déplacement de fréquence est indiqué en 1 et celui de la modulation analogique est indiqué en 2. Pour mémoire, on a indiqué en 4 le spectre de la sous-porteuse de chrominance. Les repères 6 indiquent les extrémités théoriques du canal (largeur : 8 MHz).

La figure 2 montre plus en détail le spectre obtenu autour de la porteuse son 7. Dans l'exemple représenté, les signaux audibles utilisés sont des sinusoïdes à 600 Hz. Sur la figure, les graduations de l'axe horizontal sont espacées de 100 kHz. Un signal audible à 600 Hz module en fréquence une sous-porteuse à 150 kHz avec une excursion de ± 50 kHz, et cette sous-porteuse module à son tour, et toujours en fréquence, la porteuse principale de son 7, avec une excursion de 100 kHz. Le spectre de cette modulation est représenté en 1. Le spectre de l'autre modulation, c'est-à-dire de l'autre voie de son, modulée en amplitude, est représenté en 2. Les valeurs d'excursion de fréquence citées ci-dessus constituent des valeurs satisfaisantes dans la pratique pour l'émission de signaux selon l'invention. On constate que l'énergie à la limite 6 du canal, c'est-à-dire à 250 kHz de la porteuse son, est pratiquement nulle : il n'y a pas débordement dans le canal voisin.

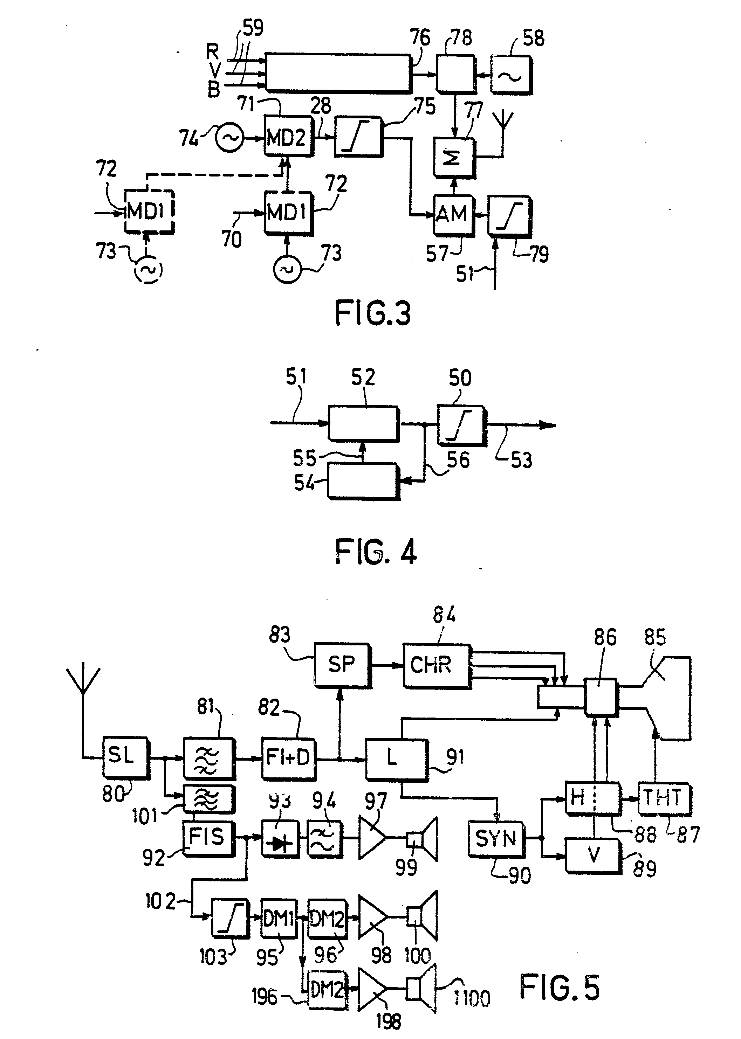

Afin de donner une vue d'ensemble d'un moyen de réaliser un émetteur de télévision utilisant le procédé selon l'invention, la figure 3 montre le schéma général d'un émetteur. Les blocs représentés sont parfaitement connus de l'homme de métier. Une information « vidéo » est introduite par les entrées 59. Le signal à fréquence audible qui doit être reçu par les téléviseurs de l'art antérieur est introduit par l'entrée 51. Un autre signal à fréquence audible est fourni à l'entrée 70. La vidéo est mise en forme dans le bloc 76 pour créer l'information de luminance et une sous-porteuse pour les différences de couleur. Une porteuse issue de l'oscillateur 58 est fournie au modulateur 78 qui engendre la porteuse vision à la fréquence d'émission.

Le signal d'une première voie de son introduit par l'entrée 51 passe par un limiteur 79, dont le rôle sera expliqué plus loin, et module en amplitude, dans le modulateur 57, la porteuse modulée en fréquence issue de l'élément 75.

Le signal audio d'une deuxième voie de son introduit en 70 module dans le modulateur 72 une sous-porteuse fournie par l'oscillateur 73, par exemple à 150 kHz. Cette sous-porteuse modulée sert de signal modulant à un deuxième modulateur 71 qui module en fréquence une onde porteuse fournie par l'oscillateur 74, directement à la fréquence d'émission. Cette onde, modulée en fréquence, traverse ensuite, éventuellement, un limiteur ou régulateur d'amplitude 75 pour éliminer toute modulation d'amplitude résiduelle. L'onde issue de ce régulateur 75 est utilisée comme porteuse par le modulateur 57 pour y être, selon une technique connue, modulée en amplitude, amplifiée et fournie à l'antenne (en même temps que la vidéo provenant du bloc 78) par le bloc 77, qui additionne les porteuses son et vision.

Dans une variante de réalisation, le modulateur 72 est un modulateur d'amplitude ; dans une autre variante, c'est un modulateur de fréquence.

Pour pouvoir obtenir en permanence une information de déplacement de fréquence en réception, il est nécessaire que la porteuse soit toujours présente, ce qui implique que le taux de modulation d'amplitude soit limité de façon telle que l'amplitude de la porteuse soit en toutes circonstances supérieure à un seuil déterminé. Ceci est obtenu au moyen du limiteur 79, qui est représenté plus en détail par la figure 4 : le signal basse fréquence introduit en 51, traverse un circuit à gain variable 52 dont la variation de gain est commandée par une donnée introduite en 55. La tension de sortie du circuit 52 est disponible sur le conducteur 56 qui alimente un détecteur d'amplitude 54, lequel fournit les données de réglage au circuit 52 par le conducteur 55. Ce montage est réglé de façon telle que le taux de modulation finale d'amplitude ne puisse dépasser, par exemple, 80 %. Ainsi, il restera toujours au moins 20 % de la porteuse nominale pour véhiculer le signal modulé en fréquence.

Un écrêteur 50 est placé en sortie par sécurité mais ne devrait pas, en principe, intervenir car il provoquerait une distorsion du signal. Sa présence signifie que l'on donne la priorité à la qualité des signaux modulés en fréquence.

La figure 5 représente le schéma général d'un récepteur destiné à recevoir toutes les voies de son émises selon l'invention. La plupart des fonctions y sont bien connues de l'homme de métier : la tête haute fréquence et changement de fréquence 80 (ou sélecteur SL), un filtre 81 pour séparer la bande passante de fréquence intermédiaire FI vidéo, un ampli FI et démodulateur de vidéo 82, un séparateur de sous-porteuse couleur 83 et un décodeur couleur 84, un amplificateur de luminance 91, un circuit de synchronisation du balayage 90 avec des circuits ligne et trame 88, 89, un déflecteur 86 et une THT 87 ainsi qu'un tube à rayons cathodiques 85.

La partie son comprend un filtre 101 pour séparer la sous-porteuse son, habituellement à 39,2 MHz, un circuit amplificateur 92 de fréquence intermédiaire son, un détecteur d'enveloppe 93 pour démoduler la porteuse en amplitude, ce dernier étant suivi d'un filtre passe-bas 94 à coupure rapide destiné à éliminer les éventuels résidus de démodulation dus à la modulation de fréquence. Ce filtre pourra, par exemple, avoir une fréquence de coupure d'environ 12 kHz.

Cette première voie démodulée est enfin fournie à un amplificateur 97 et à un système haut-parleur 99.

Le conducteur 102 amenant la fréquence intermédiaire son, dite onde incidente, à l'entrée des premiers moyens 93 pour démoduler en amplitude est également connecté à l'entrée de seconds moyens 103, 95, 96 pour extraire de cette même onde incidente, qui est en plus modulée en fréquence par une sous-porteuse, une deuxième voie de son véhiculée par ladite sous-porteuse.

Dans le cas où la sous-porteuse est modulée en fréquence, ces seconds moyens comportent un premier démodulateur de fréquence 95, et un deuxième démodulateur de fréquence 96 auquel est fourni le signal produit par le premier démodulateur de fréquence 95. Un limiteur 103 est utilisé dans le cas où le démodulateur 95 n'est pas d'un type autolimiteur. Bien entendu, tous les types de démodulateurs sont utilisables, par exemple le discriminateur « Foster Seeley », le détecteur de rapport, le démodulateur à comptage, ou à boucle asservie en fréquence, etc...

Dans le cas où la modulation de la sous-porteuse est réalisée en amplitude, le démodulateur 96 est un démodulateur d'amplitude auquel est fourni le signal produit par le démodulateur de fréquence 95.

Un avantage du procédé est qu'il permet, si on le désire, la transmission de plus de deux voies de son. En effet, en choisissant des fréquences de sous-porteuses et des excursions de fréquences adaptées, on peut utiliser simultanément plusieurs sous-porteuses, sans pour autant souffrir d'un mélange entre leurs informations, et sans occuper une bande spectrale trop importante. Il suffit, pour engendrer l'émission de plusieurs voies, de disposer plusieurs exemplaires de modulateur 72 et d'oscillateur 73 (cf. figure 3), tous les modulateurs 72 fournissant en parallèle leurs sous-porteuses modulées à la même entrée du deuxième modulateur 71 qui, lui, n'existe qu'à un exemplaire.

On peut choisir, par exemple, une première sous-porteuse à 80 kHz et une seconde à 160 kHz, avec une excursion de fréquence de ± 20 kHz, ce qui permet, en modulant (toujours avec une excursion de ± 100 kHz) le modulateur 71 avec ces deux sous-porteuses simultanément, d'émettre deux voies de son en plus de la voie habituelle modulée en amplitude, soit trois voies au total.

Alors, le récepteur de la figure 5 comporte une troisième voie de son 196, 198, 1100. La sélection entre les voies démodulées par les démodulateurs 96 et 196 est faite par des filtres de fréquence, incorporés dans chacun des démodulateurs, et dont la bande passante correspond pour chacun à la fréquence de la sous-porteuse à démoduler. Dans le cas d'une modulation de la sous-porteuse par déplacement de fréquence, on peut encore plus simplement réaliser cette sélection en choisissant les fréquences centrales des détecteurs 96, 196 du type « discriminateur », dont la sensibilité, en dehors d'une bande choisie, est nulle.

Les signaux démodulés par le(s) deuxième(s) démodulateur(s) 96, 196 est (sont) fourni(s) à un (des) amplificateur(s) 98, 198 et à un (des) système(s) haut-parleur(s) 100, 1100.

Beaucoup de variantes techniques sont envisageables. On peut, par exemple, supprimer le limiteur 75 (figure 3) ainsi que le limiteur 50 (figure 4), ou le filtre 94 (figure 5).

On peut aussi ajouter des fonctions telles que des filtrages ou écrêtages supplémentaires à différents niveaux. En ce qui concerne la modulation ou la démodulation, tant de fréquence que d'amplitude, la littérature technique fait connaître un certain nombre de moyens assez différents les uns des autres, et que l'on peut utiliser indifféremment sans pour autant sortir du cadre de l'invention.

Dans une variante de l'invention, ledit « signal à fréquence audible » d'une deuxième voie de son peut être un signal composite, comportant lui-même une sous-porteuse véhiculant un signal de différence entre canaux stéréo gauche-droit, par exemple selon le standard français utilisé par les émetteurs radiophoniques en modulation de fréquence. On a ainsi deux « étages » de sous-porteuses.

Le récepteur comportera alors un décodeur en aval du démodulateur 96, de façon à extraire et à recoder selon les moyens habituels les deux voies gauche et droite.

On peut, sur ce principe, imaginer une quantité de solutions intéressantes, par exemple transmettant un son monaural en modulation d'amplitude, plus un deuxième son stéréo et, éventuellement, un troisième, selon le procédé de l'invention.

**Revendications**

1. Procédé d'émission de télévision associant la transmission d'images à celle de plusieurs voies de son dans lequel on utilise, pour transmettre une première voie de son, une modulation de l'amplitude d'une porteuse (7), cette même porteuse étant en plus modulée par déplacement de fréquence ou de phase, de façon à transmettre au moins une deuxième voie de son, caractérisé en ce que le signal modulant utilisé pour cette modulation par déplacement de fréquence ou de phase est une sous-porteuse elle-même modulée directement par le signal à fréquence audible d'une deuxième voie de son.

2. Procédé selon la revendication 1, caractérisé en ce que ladite sous-porteuse est modulée en amplitude.

3. Procédé selon la revendication 1, caractérisé en ce que ladite sous-porteuse est modulée par déplacement de fréquence ou de phase.

4. Procédé selon l'une quelconque des revendications 1 à 3, caractérisé en ce que ledit signal à fréquence audible d'une deuxième voie de son est un signal composite, comportant lui-même une sous-porteuse véhiculant un signal de différence entre canaux stéréo.

5. Emetteur de télévision pour émettre des images et plusieurs voies de son, muni d'un modulateur d'amplitude (57) pour une première voie de son utilisant une première porteuse, et de moyens (71) pour moduler en fréquence l'onde qui est utilisée comme première porteuse par le susdit modulateur d'amplitude (57), caractérisé en ce qu'il est muni, en outre, de moyens (72) pour moduler au moins une sous-porteuse à partir du signal audio d'au moins une deuxième voie de son (70), ces moyens pour moduler une sous-porteuse fournissant le signal modulant aux susdits moyens pour moduler en fréquence.

6. Emetteur de télévision selon la revendication 5, caractérisé en ce que les moyens pour moduler au moins une sous-porteuse à partir du signal audio (70) d'au moins une deuxième voie de son sont constitués par un modulateur d'amplitude (72).

7. Emetteur de télévision selon la revendication 5, caractérisé en ce que les moyens pour moduler au moins une sous-porteuse à partir du signal audio (70) d'au moins une deuxième voie de son sont constitués par un modulateur déplaçant la fréquence ou la phase (72) de la sous-porteuse.

8. Téléviseur comportant des premiers moyens (93) pour démoduler une onde incidente modulée en amplitude par une voie de son, dans lequel un conducteur (102) amenant cette onde incidente à l'entrée de ces premiers moyens est également connecté à l'entrée de seconds moyens (95, 96) pour extraire de cette même onde incidente une modulation en fréquence, caractérisé en ce que lesdits seconds moyens comportent un premier démodulateur de fréquence (95), et un deuxième démodulateur de fréquence (96) auquel est fourni le signal produit par le premier démodulateur de fréquence (95).

9. Téléviseur comportant des premiers moyens (93) pour démoduler une onde incidente modulée en amplitude par une voie de son, dans lequel un conducteur (102) amenant cette onde incidente à l'entrée de ces premiers moyens est également connecté à l'entrée de seconds moyens (95, 96) pour extraire de cette même onde incidente une modulation en fréquence, caractérisé en ce que lesdits seconds moyens comportent un démodulateur de fréquence (95), et un démodulateur d'amplitude (96) auquel est fourni le signal produit par le démodulateur de fréquence (95).

10. Téléviseur selon l'une des revendications 8 ou 9, caractérisé en ce qu'il comporte un décodeur pour un signal stéréo codé, et en ce que le signal stéréo codé lui est fourni par les susdits seconds moyens pour extraire une deuxième voie de son.

**Claims**

1. A television transmission method combining the transmission of images with that of a plurality of sound channels in which amplitude modulation of a carrier (7) is employed for transmitting a first sound channel, said carrier being also frequency or phase shift keying modulated by so as to transmit at least a second sound channel, characterized in that the modulating signal used for said frequency or phase shift keying is a sub-carrier which is directly modulated by the audio frequency signal of a second sound channel.

2. A method as claimed in Claim 1, characterized in that the said sub-carrier is amplitude-modulated.

3. A method as claimed in Claim 1, characterized in that the said sub-carrier is frequency or phase shift modulated.

4. A method as claimed in any one of Claims 1 to 3, characterized in that the said audio frequency signal of a second sound channel is a composite signal comprising a sub-carrier conveying a stereo difference signal.

5. A television transmitter for transmitting images and a plurality of sound channels, comprising an amplitude modulator (57) for a first sound channel using a first carrier, and means (71) for frequency-modulating the wave which is used as said first carrier by the afore-mentioned amplitude modulator (57), characterized in that it comprises, *inter alia*, means (72) for modulating at least one sub-carrier of the audio signal of at least a second sound channel (70), said means for modulating the lastmentioned sub-carrier applying the modulated signal to the afore-mentioned means for frequency modulation.

6. A television transmitter as claimed in Claim 5, characterized in that the means for modulating at least one sub-carrier of the audio signal (70) of at least a second sound channel are constituted by an amplitude modulator (72).

7. A television transmitter as claimed in 5, characterized in that the means for modulating at least one sub-carrier of the audio signal (70) of at least a second sound channel are constituted by a modulator shifting the frequency or the phase (72) of the sub-carrier.

8. A television receiver comprising first means (93) for demodulating an incident sound-channel amplitude-modulated wave, in which a conductor (102) applying said incident wave to the input of said first means is also connected to the input of second means (95, 96) for extracting a frequency modulation from said incident wave, characterized in that said second means comprise a first frequency demodulator (95) and a second frequency demodulator (96) to which the signal produced by the first frequency demodulator (95) is applied.

9. A television receiver comprising first means (93) for demodulating an incident sound channel amplitude-modulated wave, in which a conductor (102) applying said incident wave to the input of said first means is also connected to the input of second means (95, 96) for extracting a frequency modulation from said incident wave, characterized in that said second means comprise a frequency demodulator (95) and an amplitude demodulator (96) to which the signal produced by the frequency demodulator (95) is applied.

10. A television receiver as claimed in Claim 8 or 9, characterized in that it comprises a decoder for a stereo-encoded signal and in that the stereo-encoded signal is supplied by the above-mentioned second means for extracting a second sound channel.

**Patentansprüche**

1. Fernsehübertragungsverfahren, wobei die Bildübertragung mit der Übertragung verschiedener Audiokanäle verknüpft ist, wobei zum Übertragen eines ersten Tonkanals eine Amplitudenmodulation eines Trägers (7) benutzt wird, der ausserdem durch Frequenzumtastung oder Phasenverschiebung derart moduliert ist, dass zumindest ein zweiter Audiokanal übertragen wird, dadurch gekennzeichnet, dass das für diese Modulation durch Frequenzumtastung oder Phasenverschiebung benutzte modulierende Signal ein Hilfsträger ist, der selbst durch das Audiofrequenzsignal eines zweiten Audiokanals direkt moduliert ist.

2. Verfahren nach Anspruch 1, dadurch gekennzeichnet, dass dieser Hilfsträger amplitudenmoduliert ist.

3. Verfahren nach Anspruch 1, dadurch gekennzeichnet, dass dieser Hilfsträger durch Frequenzumtastung oder Phasenverschiebung moduliert ist.

4. Verfahren nach einem der vorangehenden Ansprüche 1 bis 33, dadurch gekennzeichnet, dass das Audiofrequenzsignal aus einem zweiten Audiokanal ein Signalgemisch ist, das selbst einen Hilfsträger enthält, der ein Differenzsignal zwischen Stereokanälen überträgt.

5. Fernsehsender zum Übertragen von Bildern und mehrerer Audiokanälen, mit einem Amplitudenmodulator (57) für einen ersten Audiokanal unter Verwendung eines ersten Trägers und mit Mitteln (71) zum Frequenzmodulieren des als erster Träger von genannten Amplitudenmodulator (57) benutzten Impulses, dadurch gekennzeichnet, dass ausserdem Mittel (72) zum Modulieren zumindest eines Hilfsträgers ausgehend von einem Audiosignal zumindest aus einem zweiten Audiokanal (70) vorgesehen sind, die zum Modulieren eines Hilfsträgers das modulierende Signal zu diesen genannten Mitteln für die Frequenzmodulation liefern.

6. Fernsehsender nach Anspruch 5, dadurch gekennzeichnet, dass die Mittel zum Modulieren zumindest eines Hilfsträgers ausgehend vom Audiosignal (70) aus zumindest einem zweiten Audiokanal aus einem Amplitudenmodulator (72) bestehen.

7. Fernsehsender nach Anspruch 5, dadurch gekennzeichnet, dass die Mittel zum Modulieren zumindest eines Hilfsträgers ausgehend vom Audiosignal (70) aus zumindest einem zweiten Audiokanal aus einem Modulator bestehen, der die Frequenz umtastet oder Phase (72) des Hilfsträgers verschiebt.

8. Fernsehempfänger mit ersten Mitteln (93) zum Demodulieren eines von einem Audiokanal amplitudenmodulierten ankommenden Impulses, in dem ein den beim Eingang dieser ersten Mittel ankommenden ersten Impuls führender Leiter (102) ebenfalls mit dem Eingang zweiter Mittel (95, 96) verbunden ist, um aus diesem ankommenden Impuls eine Frequenzmodulation abzuleiten, dadurch gekennzeichnet, dass die genannten zweiten Mittel einen ersten Frequenzdemodulator (95) und einen zweiten Frequenzdemodulator (96) enthalten, dem das vom ersten Frequenzdemodulator (95) gelieferte Signal zugeführt wird.

9. Fernsehempfänger mit ersten Mitteln (93) zum Demodulieren eines von einem Audiokanal amplitudenmodulierten ankommenden Impulses, in dem ein den beim Eingang dieser ersten Mittel ankommenden Impuls führender Leiter (102) ebenfalls mit dem Eingang zweiter Mittel (95, 96) verbunden ist, um aus diesem ankommenden Impuls eine Frequenzmodulation abzuleiten, dadurch gekennzeichnet, dass diese zweiten Mittel einen Frequenzdemodulator (95) und einen Amplitudendemodulator (96) enthalten, dem das von dem Frequenzdemodulator (95) gelieferte Signal zugeführt wird.

10. Fernsehempfänger nach einem der Ansprüche 8 und 9, dadurch gekennzeichnet, dass er einen Decoder für eine codiertes Stereosignal enthält, und dass das codierte Stereosignal von den genannten zweiten Mitteln dem Empfänger zugeführt wird, um einen zweiten Tonkanal abzuleiten.

0 086 525

FIG.1

FIG.2

1

FIG.3

FIG. 4

FIG.5